# EUROPÄISCHE PATENTSCHRIFT

(11) **EP 3 191 729 B1**
(45) Veröffentlichungstag und Bekanntmachung des Hinweises auf die Patenterteilung: **15.08.2018**
(21) Anmeldenummer: 15767435.9
(22) Anmeldetag: 01.09.2015
(51) Int. Cl.: F16D 55/2265, F16D 65/00

(54) **FÜHRUNGSEINRICHTUNG FÜR DEN BREMSSATTEL EINER SCHWIMMSATTELSCHEIBENBREMSE**
CALIPER GUIDE DEVICE FOR A FLOATING CALIPER BRAKE CALIPER
GUIDAGE D'UN ÉTIRIER D'UN FREIN À DISQUE À ÉTRIER FLOTTANT

(30) Priorität: 12.09.2014 DE 102014013535
(43) Veröffentlichungstag der Anmeldung: 19.07.2017
(73) Patentinhaber: Lucas Automotive GmbH, 56070 Koblenz (DE)
(72) Erfinder: BECKER, Marco, 56651 Oberduerenbach (DE)
(74) Vertreter: Schmidt, Steffen J.
(86) Internationale Anmeldenummer: PCT/EP2015/069917
(87) Internationale Veröffentlichungsnummer: WO 2016/037894

(56) Entgegenhaltungen:
- DE-A1- 2 514 383
- DE-A1-102011 017 220
- DE-U1-202006 006 142
- US-A1- 2014 116 817
- US-A1- 2014 262 637

## Beschreibung

Die vorliegende Erfindung betrifft eine Kraftfahrzeugbremsanlage, umfassend einen Bremsträger, der wenigstens eine eine erste Längsachse definierende Bohrung aufweist, und einen Führungsbolzen, der in der Bohrung angeordnet und dazu ausgebildet ist, den Bremssattel relativ zum Bremsträger verschiebbar zu lagern, wobei der Führungsbolzen eine zweite Längsachse definiert, wobei die Scheibenbremsenanordnung ferner einen Schutzbalg umfasst, der aus der Bohrung herausragende Bereiche des Führungsbolzens zumindest teilweise umgibt.

Derartige Scheibenbremsenanordnungen mit einem Schutzbalg sind aus dem Stand der Technik bekannt. Dabei dient der Schutzbalg insbesondere zur Abdichtung des Führungsbolzens bzw. der Bohrung im Bremsträger gegenüber der Umgebung. Ebenso kann der Schutzbalg dämpfend auf die Verlagerungsbewegungen des Führungsbolzens einwirken, beispielsweise um ein durch ein Funktionsspiel zwischen Führungsbolzen und der Bohrung im Bremsträger bedingtes, hörbares metallisches Anschlagen des Führungsbolzens gegen den Bremsträger zu vermeiden.

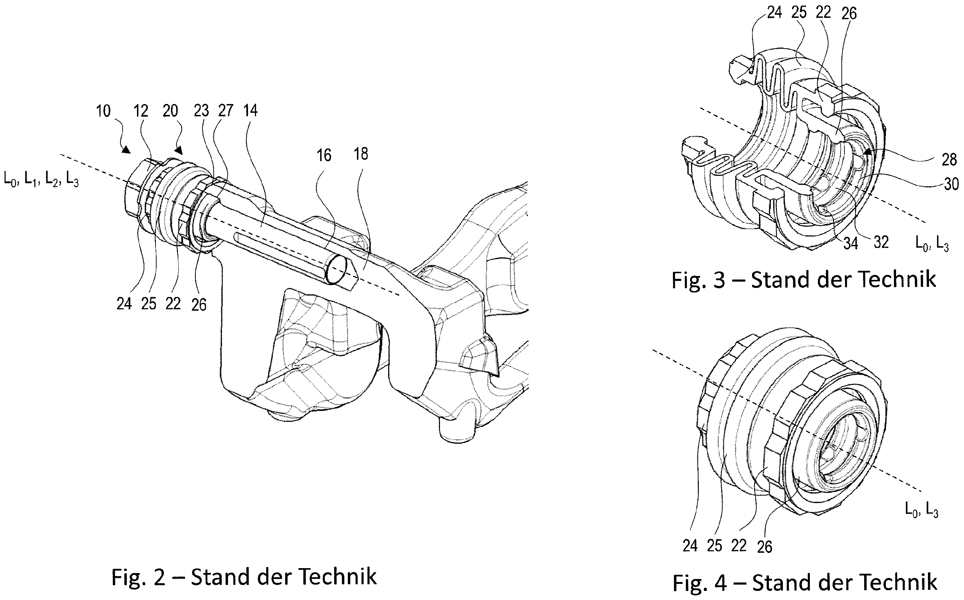

Das Dokument DE 10 2011 017 220 A1 offenbart diesbezüglich eine beispielhafte Lösung, die in den Figuren 2 bis 4 des vorliegenden Dokuments dargestellt ist. Wie man in Fig. 2 erkennt, ist bei dieser Lösung ein Führungsbolzen 10 mit einem Kopfbereich 12 ausgebildet, von dem sich ein zylindrischer Schaftbereich 14 entlang einer Führungsbolzenlängsachse L₂ erstreckt. Der Schaftbereich 14 ist größtenteils in einer Bohrung 16 in einem in Teilschnittansicht gezeigten Bremssattel 18 aufgenommen und darin verlagerbar geführt. Die Bohrung 16 definiert eine Bohrungslängsachse L₁, die im gezeigten Fall mit der Führungsbolzenlängsachse L₂ zusammenfällt. Mit anderen Worten ist der Führungsbolzen 12 mit seinem Schaftbereich 14 konzentrisch in der Bohrung 16 aufgenommen. In bekannter Weise ragt der Führungsbolzen 12 dabei je nach aktuellem Betriebszustand der Scheibenbremsanordnung um ein unterschiedliches Maß aus der Bohrung 16 hinaus.

In Fig. 2 ist ferner ein Schutzbalg 20 gezeigt, der in den Figuren 3 und 4 in einer Einzelteil- und in Teilschnittansicht gezeigt ist. Der Schutzbalg 20 weist einen ersten Befestigungsabschnitt 22 auf, der dichtend in einer Ausnehmung 23 am Bremsträger 18 befestigt ist. An seinem dem Befestigungsabschnitt 22 axial gegenüberliegenden Ende weist der Schutzbalg 20 einen zweiten Befestigungsabschnitt 24 auf, der im Bereich des Kopfabschnitts 12 an dem Führungsbolzens 10 dichtend befestigt ist.

Eine ausführliche Beschreibung einer derartigen Befestigungslösung mittels den Abschnitten 22 und 24 findet sich in dem Dokument DE 20 2006 006 142 U1.

Die beiden Befestigungsabschnitte 22, 24 sind im Wesentlichen ringförmig ausgebildet und konzentrisch zueinander angeordnet. Durch die jeweiligen Mittelpunkte ihrer ringförmigen Querschnitte erstreckt sich eine Längsachse L₀ des Schutzbalges 20. Ferner sind die Befestigungsabschnitte 22, 24 über einen dazwischen angeordneten Deformationsabschnitt 25 in Form eines Faltenbalges verbunden, der allgemein zylindrisch ausgebildet ist und sich ebenfalls konzentrisch um die Schutzbalglängsachse L₀ erstreckt. Der Schutzbalg 20 umgibt somit die aus der Bohrung 16 herausragenden Bereiche des Schaftabschnitts 14 des Führungsbolzens 10 und folgt dessen Verlagerungsbewegungen über den zweiten Befestigungsabschnitt 24 unter einer Deformation des Deformationsabschnittes 25.

Ferner weist der Schutzbalg 20 einen Führungsabschnitt 26 auf, der einen Teil des Schaftabschnitts 14 des Führungsbolzens 10 verlagerbar aufnimmt. Wie man in den Figuren 3 und 4 erkennt, ist der Führungsabschnitt 26 als ein im Wesentlichen zylindrischer Abschnitt des Schutzbalges 20 ausgebildet, der sich mit einem symmetrischen Querschnitt um eine Längsachse L₃ erstreckt. Ferner erkennt man, dass der Führungsabschnitt 26 innerhalb des durchmessergrößeren ersten Befestigungsabschnittes 22 angeordnet ist. Im gezeigten Fall ist der Führungsabschnitt 26 konzentrisch zu den Befestigungsabschnitten 22, 24 und dem Deformationsabschnitt 26 angeordnet, so dass die Schutzbalglängsachse L₀ und die Führungsabschnittlängsachse L₃ zusammenfallen. Der Führungsabschnitt 26 ist ferner in einer Ausnehmung 27 im Bremsträger abschnittsweise aufgenommen.

In seinem Innenumfangsbereich 28 weist der Führungsabschnitt 26 eine Anlagefläche 30 auf, die zur Einstellung der Dichtungs- und Reibungseigenschaften bei der Führung des Führungsbolzen 10 mit Nuten 32 und Ausnehmungen 34 ausgebildet ist. Der Führungsbolzen 10 ist dabei in dem Schutzbalg 20 derart geführt, dass die Führungsbolzenlängsachse L₂ und die Schutzbalg- und Führungsabschnittslängsachse L₀, L₃ zusammenfallen. Insgesamt sind bei dieser Lösung somit der Führungsabschnitt 26 und die Bohrung 16 fluchtend bzw. konzentrisch zueinander angeordnet, so dass auch die Führungsabschnittslängsachse L₃ und die Bohrungslängsachse L₁ zusammenfallen.

Allgemein ist es vorteilhaft, wenn der Führungsbolzen mit einem gewissen Funktionsspiel in der Bohrung aufgenommen ist, um ein Verklemmen zu vermeiden. Dies betrifft insbesondere ein Funktionsspiel quer zu den Längsachsen von Führungsbolzen bzw. Bohrung. Mit anderen Worten ist es wünschenswert, wenn der Führungsbolzen zu einem gewissen Grad innerhalb der Bohrung quer bzw. radial versetzbar ist. Dies ermöglicht beispielsweise, dass der Führungsbolzen bei einer dynamischen Verlagerung vorrübergehend in eine solche Richtung ausweichen kann. Hierzu sind, wie im vorstehend diskutierten Fall, insbesondere Lösungen mit konzentrisch in einer Bohrung geführten Führungsbolzen mit einem in Umfangsrichtung gleichmäßig umlaufenden radialen Führungsspiel bekannt.

Das Dokument DE 197 10 690 A1 beschreibt eine Scheibenbremse mit einem Gleitführungsmechanismus, der einen Hauptführungsstift und einen Nebenführungsstift umfasst, die jeweils in einem Führungsloch axial verlagerbar aufgenommen sind. Der Nebenführungsstift ist dabei auf einer einlaufenden Seite einer Bremsscheibe angeordnet, während der Hauptführungsstift auf der auslaufenden Seite der Bremsscheibe angeordnet ist. Ferner sind an Abschnitten der Führungsstifte, die aus den Öffnungen der Führungslöcher herausragen, Gummimanschetten vorgesehen, um Wasser und Staub abzuweisen. Der Nebenführungsstift weist einen geringeren Durchmesser auf als das den Nebenführungsstift aufnehmende Führungsloch, sodass der Nebenführungsstift auch radial in dem Führungsloch verlagerbar ist. Dadurch wird der Nebenführungsstift beim Durchführen einer Bremsung durch die von der Bremsscheibe übertragenen Kräfte gegen den Innendurchmesser des zugehörigen Führungslochs gepresst, wodurch Vibrationen eingeschränkt werden sollen.

Weiterer Stand der Technik ist aus dem Dokument DE 25 14 383 A1 bekannt, das eine Fahrzeugscheibenbremse mit einer Gleitverbindung zwischen einem Sattel und einem Bremsträger beschreibt, wobei die Gleitverbindung zwei Bolzen umfasst. Die Bolzen sind jeweils in eine mit Übermaß ausgebildete Öffnung verlagerbar aufgenommen. Ferner sind die Bolzen abschnittsweise mit Dichtmanschetten versehen, die die Gleitflächen der Bolzen schützen. Eine Blattfeder ist zwischen einem Scheitelteil des Sattels und Halteplatten von Reibbelägen angeordnet und spannt die Bolzen in eine exzentrische Lage in den jeweiligen Öffnungen vor.

Bei derartigen Lösungen hat es sich allerdings gezeigt, dass es bei der Führung des Führungsbolzens in der Bohrung des Bremsträgers zu verschiedenen Störeinflüssen kommen kann, die ein geräuscharmes Betreiben der Scheibenbremse erschweren, was von einem Fahrzeugbediener unter Umständen als störend empfunden werden kann. Insbesondere kann es in bestimmten Situationen bei einer Verlagerung des Führungsbolzens innerhalb des vorgesehenen Funktionsspiels zu einem Anschlagen des Führungsbolzens gegen die Innenumfangsfläche der Bohrung kommen. Reibschwingungen zwischen dem Bremsbelag und der Bremsscheibe können dabei auch auf den Führungsbolzen übertragen werden und zu pulsierenden Verlagerungen und entsprechenden Geräuschen führen.

Es ist daher Aufgabe der vorliegenden Erfindung, eine Scheibenbremsenanordnung für eine Kraftfahrzeugbremseinheit der eingangs bezeichneten Art mit verbesserten Führungseigenschaften des Bremssattels relativ zum Bremsträger bereitzustellen.

Diese Aufgabe wird durch eine Scheibenbremsenanordnung für eine Kraftfahrzeugbremsanlage gelöst, bei der vorgesehen ist, dass der Schutzbalg einen Führungsabschnitt aufweist, der dazu eingerichtet ist, den Führungsbolzen derart verlagerbar zu führen, dass die zweite Längsachse des Führungsbolzens relativ zu der ersten Längsachse der Bohrung versetzt ist.

Durch die erfindungsgemäße versetzte Anordnung der Längsachsen, worunter insbesondere ein Versetzen in radialer Richtung (Querrichtung) bezüglich der Längsachsen zu verstehen ist, ist der Führungsbolzen sozusagen exzentrisch in der Bohrung des Bremsträgers angeordnet. Entgegen den bekannten Lösungen aus dem Stand der Technik mit einem konzentrisch in einer Bohrung und einem Führungsabschnitt des Schutzbalgs geführtem Führungsbolzen ist Letzterer erfindungsgemäß in zumindest einer radialen Richtung mit einem reduzierten Abstand zu der Innenumfangsfläche der Bohrung angeordnet. Dabei kann insbesondere vorgesehen sein, dass die zweite Längsachse des Führungsbolzens um ein solches Maß relativ zu der Längsachse der Bohrung versetzt ist, dass wenigstens ein definierter Kontaktpunkt zwischen einem Umfangsteilbereich des Führungsbolzens und einer Innenumfangsfläche der Bohrung vorhanden ist, so dass der Führungsbolzen in eine definierte Anlage zu der Innenumfangsfläche der Bohrung gebracht wird. In diesem Zusammenhang kann der Kontaktbereich als einzelner Punkt ausgebildet sein, in Längsrichtung des Führungsbolzens betrachtet mehrere Kontaktpunkte umfassen oder einen einzelnen oder mehrere linienförmige oder flächige Abschnitte umfassen.

Durch das erfindungsgemäße exzentrische Anordnen des Führungsbolzens in der Bohrung kann die Auswirkung von funktionsbedingten Vibrationen gemindert oder sogar vollständig unterbunden werden. Insbesondere durch das Bereitstellen eines definierten metallischen Kontaktbereichs bei einer direkten Anlage des Führungsbolzens an der Innenumfangsfläche der Bohrung können auf dem Führungsbolzen wirkende Querkräfte unmittelbar in den Bremsträger eingeleitet werden, ohne dass der Führungsbolzen in die entsprechende Richtung verlagert wird. In diesem Zusammenhang kann die Versetzung der Längsachsen zueinander insbesondere derart erfolgen, dass in radialer Richtung betrachtet die Versetzungsrichtung einer erwarteten Haupteintragsrichtung von Querkräften im Betrieb der Scheibenbremsenanordnung entspricht. Ferner kann erfindungsgemäß vorgesehen sein, dass der Führungsabschnitt elastisch deformierbar ausgebildet ist, so dass der Führungsbolzen auch mit einem notwendigen Führungsspiel in Querrichtung geführt wird.

Der Erfinder hat ferner erkannt, dass durch das Versetzen der Längsachsen mittels des Schutzbalgs eine besonders kostengünstige Lösung bereitgestellt werden kann.

Wie nachfolgend beschrieben, müssen bei den erfindungsgemäßen Varianten nur wenige Komponenten spezifisch ausgebildet sein oder angepasst werden, um die beabsichtigte Wirkung zu erzielen. Dies betrifft zum Beispiel lediglich geringfügige Anpassung innerhalb des Führungsabschnittes des Schutzbalges oder eine leicht veränderte Anordnung des Schutzbalges am Bremsträger. Somit können die übrigen Komponenten aus den bekannten Lösungen gemäß Stand der Technik weitestgehend unverändert weiterverwendet werden.

Eine Weiterbildung der Erfindung sieht vor, dass sich der Führungsabschnitt im Wesentlichen um eine dritte Längsachse erstreckt. Der Führungsabschnitt kann allgemein beliebig gestaltet sein und die Position der zweiten Längsachse des Führungsbolzens festlegen. Insbesondere kann aber vorgesehen sein, dass sich der Führungsabschnitt um einen gewissen Außenumfangsbereich des Führungsbolzens erstreckt, wobei die dritte Längsachse des Führungsabschnitts parallel zu derjenigen des Führungsbolzens verläuft. Ferner kann der Führungsabschnitt mit einem symmetrischen Querschnitt ausgebildet sein, insbesondere symmetrisch zu der dritten Längsachse, und sich axial entlang der dritten Längsachse erstrecken. Unter einem symmetrischen Erstrecken zur Längsachse ist dabei insbesondere das Ausbilden des Führungsabschnittes mit einem Querschnitt zu verstehen, der punktsymmetrisch bezüglich des Schnittpunktes der Längsachse mit der Querschnittsebene ist. Eine bevorzugte Variante sieht vor, dass der Führungsabschnitt im Wesentlichen zylindrisch ausgebildet und den Schaftabschnitt eines Führungsbolzens abschnittsweise aufnimmt.

In diesem Zusammenhang kann erfindungsgemäß ferner vorgesehen sein, dass die dritte Längsachse des Führungsabschnittes relativ zu der ersten Längsachse der Bohrung versetzt ist. Dabei kann erfindungsgemäß auch vorgesehen sein, dass der Führungsbolzen derart von dem Führungsabschnitt geführt ist, dass die zweite Längsachse des Führungsbolzens im Wesentlichen mit der dritten Längsachse des Führungsabschnittes zusammenfällt.

Gemäß den vorstehenden Varianten kann der Führungsbolzen also konzentrisch im Führungsabschnitt geführt sein, wobei jedoch der Führungsabschnitt als solcher exzentrisch zu der Bohrung angeordnet ist und/oder nicht mit dieser fluchtet. Bezug nehmend auf die vorstehend diskutierten Lösungen kann erfindungsgemäß also vorgesehen sein, dass der Führungsabschnitt innerhalb des Schutzbalgs exzentrisch angeordnet ist, so dass die Führungsabschnittlängsachse und die Längsachse des Schutzbalges radial zueinander versetzt sind. Ebenso kann es erfindungsgemäß vorgesehen sein, den Schutzbalg gegenüber der aus dem Stand der Technik bekannten Lösung im Wesentlichen unverändert auszubilden, diesen aber am Bremsträger derart anzuordnen, dass der Schutzbalg insgesamt relativ zu der Bohrung radial versetzt ist. In letzterem Fall können sich die notwendigen Anpassungen auf die Ausnehmung zur Aufnahme des ersten Befestigungsabschnitts am Bremsträger beschränken, die beispielsweise ebenfalls radial versetzt oder mit verändertem Profil auszubilden ist. Insgesamt lässt sich mit den vorstehenden Varianten somit eine kostengünstige und zuverlässige Lösung zum Ermöglichen der angestrebten exzentrischen Führung des Führungsbolzens in der Bohrung bereitstellen.

Eine Weiterbildung der Erfindung sieht vor, dass der Führungsabschnitt einen mit dem Führungsbolzen wechselwirkenden Führungsbereich aufweist, der zumindest abschnittsweise mit einem asymmetrischen Querschnitt ausgebildet ist. Der Führungsbereich kann insbesondere als derjenige Bereich des Führungsbolzens ausgebildet sein, der in einer Anlage mit dem Führungsbolzen steht und die Position von dessen Längsachse festlegt. Der Querschnitt des Führungsbereichs kann allgemein offen oder geschlossen sein. In jedem Fall ist bei dieser Weiterbildung aber vorgesehen, dass der Querschnitt asymmetrisch ausgebildet ist, insbesondere in Bezug auf die dritte Längsachse des Führungsabschnitts. Dadurch kann bei dieser Weiterbildung erreicht werden, dass die dritte Längsachse des Führungsabschnitts nicht mit der Längsachse des Führungsbolzens zusammenfällt, da der asymmetrische Querschnitt den Führungsbolzen innehrhalb des Führungsabschnitts in eine radial versetzte Position zwingt. Mit anderen Worten kann erfindungsgemäß vorgesehen sein, dass der Führungsbolzen exzentrisch in dem Führungsabschnitt geführt ist und somit auch in der Bohrung des Bremsträgers. Auch diese Weiterbildung stellt eine kostengünstige und zuverlässige Lösung zum Erzielen der angestrebten Längsachsenversetzung bereit, da sich die notwendigen Anpassungen ausgehend von den bekannten Lösungen im Wesentlichen allein auf den Schutzbalg beschränken.

In diesem Zusammenhang kann erfindungsgemäß ferner vorgesehen sein, dass der Führungsbereich einen Innenumfangsbereich des Führungsabschnittes umfasst. Mit anderen Worten kann der Führungsbereich als derjenige Bereich des Führungsabschnitts ausgebildet sein, der dem Führungsbolzen gegenüberliegt und diesen zumindest teilweise umgibt oder daran anliegt. Vorzugsweise ist der Führungsbereich als ein schlauch- oder zylinderförmiger Innenumfangsbereich des Führungsabschnittes ausgebildet und liegt an der Außenumfangsfläche eines Schaftbereiches des Führungsbolzens zumindest abschnittsweise an.

Erfindungsgemäß kann in diesem Zusammenhang ferner vorgesehen sein, dass die dritte Längsachse des Führungsabschnittes im Wesentlichen mit der ersten Längsachse der Bohrung zusammenfällt. In Zusammenwirkung mit dem asymmetrischen Querschnitt des Führungsbereichs sieht diese Weiterbildung also vor, dass der Führungsabschnitt als solches im Wesentlichen konzentrisch zu der Bohrung im Bremsträger angeordnet ist und/oder mit dieser fluchtet. Allerdings ist bei dieser Weiterbildung der Führungsbolzen aufgrund des asymmetrischen Querschnitts des Führungsbereiches exzentrisch im Führungsabschnitt geführt, so dass dessen Längsachse weder mit der Längsachse des Führungsabschnitts noch mit der der Bohrung zusammenfällt. Bei dieser Variante ist der Führungsbolzen also sowohl relativ zum Schutzbalg als auch zu der Bohrung innerhalb des Führungsabschnitts radial versetzt.

Eine Weiterbildung der Erfindung sieht vor, dass der Führungsabschnitt wenigstens einen relativ zu dem Führungsbereich radial einwärts hervorstehenden Versetzungsabschnitt aufweist. Der Versetzungsabschnitt kann insbesondere als ein lokaler Abschnitt des Führungsbereichs ausgebildet sein, der derart mit dem Führungsbolzen in Anlage steht, dass er diesen erfindungsgemäß relativ zu der Längsachse der Bohrung versetzt. Dabei kann der Versetzungsabschnitt als ein lokaler Vorsprung innerhalb des Führungsbereichs ausgebildet sein, beispielsweise in Form einer Materialverdickung des Führungsabschnitts. Insbesondere kann der Versetzungsabschnitt als derjenige Abschnitt des Führungsbereichs ausgebildet sein, der den asymmetrischen Anteil des Querschnitts des Führungsbereichs bildet. Vorteilhaft bei dieser Variante ist, dass der Versetzungsabschnitt aufwandsarm als einstückiger Bestandteil des Schutzbalgs herstellbar ist und dabei auch aus einem elastisch defomierbaren Material bestehen kann. Dies ermöglicht das zuverlässige Bereitstellen einer Vorspannung des Führungsbolzens gegen die Innenumfangsfläche der Bohrung und auch eines Führungsspiels in Querrichtung, wie nachfolgend ausführlicher erläutert. Insbesondere kann der Versetzungsabschnitt einen Bereich des Führungsabschnittes definieren, der eine Übermaßpassung zum Führungsbolzen bereitstellt und/oder dessen radial einwärts ragende Abmessung ein Führungsspiel des Führungsbolzens im Sinne eines Durchmesserunterschiedes zu der Bohrung überschreitet.

Ferner kann in diesem Zusammenhang erfindungsgemäß vorgesehen sein, dass der wenigstens eine Versetzungsabschnitt einen definierten Umfangsbereich des Innenumfangbereiches überspannt. Dabei kann erfindungsgemäß auch vorgesehen sein, dass der wenigstens eine Versetzungsabschnitt korrespondierend zu denjenigen Bereichen des Führungsbolzens ausgebildet ist, mit denen er wechselwirkt. Mit anderen Worten kann der Versetzungsabschnitt also mit einer korrespondierenden Kontur zu einem Außenumfangsbereich des Führungsbolzens ausgebildet sein, mit dem er in Anlage steht. Insbesondere kann erfindungsgemäß vorgesehen sein, dass der Versetzungsabschnitt mit einem zylindrischen Schaftbereich des Führungsbolzens über einen gewissen Umfangsbereich in Anlage steht und an seiner anliegenden Innenseite mit einer entsprechend gewölbten Kontur ausgebildet ist. Dies ermöglicht ein zuverlässiges Führen des Führungsbolzens innerhalb des Führungsabschnittes und mindert die Neigung zur Geräuschentwicklungen.

Eine Weiterbildung der Erfindung sieht vor, dass sich der wenigstens eine Versetzungsabschnitt über mehr als die Hälfte der Längserstreckung des Führungsbereiches axial erstreckt und insbesondere, dass sich der Versetzungsabschnitt im Wesentlichen über die gesamte Längserstreckung des Führungsbereiches axial erstreckt. Durch Ausbilden des Versetzungsabschnitts mit einer möglichst großen axialen Längserstreckung kann gewährleistet werden, dass die Anlagefläche zum Führungsbolzen in Längsachsenrichtung derart vergrößert wird, dass Kippbewegungen des Führungsbolzens relativ zur Längsachse wirksam unterbunden werden. Dies verbessert die Führungseigenschaften und mindert die Neigung zur Geräuschentwicklung erheblich.

Eine Weiterbildung der Erfindung sieht vor, dass der Schutzbalg am Bremsträger angeordnet ist, insbesondere dass der Schutzbalg zumindest abschnittsweise in einer Ausnehmung am Bremsträger aufgenommen ist. Durch eine solche Weiterbildung kann eine sichere Befestigung des Schutzbalgs und genaue Relativpositionierung des Schutzbalgs zu dem Bremsträger und dem Führungsbolzen gewährleistet werden.

In diesem Zusammenhang kann ferner vorgesehen sein, dass der Schutzbalg über einen Außenumfangsbereich des Führungsabschnittes am Bremsträger angeordnet ist. Beispielsweise kann der Führungsabschnitt bei dieser Variante über einen Außenumfangsbereich in einer Ausnehmung im Bremsträger im Bereich der Bohrung eingreifen.

Dabei kann ferner erfindungsgemäß vorgesehen sein, dass beim Anordnen des Schutzbalges am Bremsträger eine Vorspannungskraft derart in den Führungsabschnitt einleitbar ist, dass dieser in Anlage zu dem Führungsbolzen vorgespannt wird. Beispielsweise kann die Ausnehmung, in die der Schutzbalg insbesondere über seinen Führungsabschnitt aufnehmbar ist, kleiner dimensioniert sein, als der entsprechende Abschnitt des Schutzbalgs. Somit kann der Führungsabschnitt beim Anordnen am Bremsträger definiert elastisch deformiert werden. Insbesondere können dabei vorspannende Querkräfte eingeleitet werden, die über den Führungsbereich und insbesondere dessen Versetzungsabschnitt auf den Führungsbolzen wirken. Somit kann der Führungsbolzen mit einer definierten Querkraft gegen eine Innenumfangsfläche der Bohrung vorgespannt werden, wobei durch die elastische Deformierbarkeit des Führungsbereichs auch ein ausreichendes Führungsspiel in Querrichtung bereitgestellt ist. Diese Vorspannungskräfte können allgemein alternativ oder zusätzlich zu den vorstehend genannten Vorspannungskräften des Führungsabschnittes eingeleitet werden, beispielsweise zusätzlich zu einer Aufnahme des Führungsbolzens im Führungsabschnitt unter einer Übermaßpassung.

Bei den vorstehend genannten Varianten kann in Abweichung von den konzentrisch geführten Führungsbolzen gemäß Stand der Technik erfindungsgemäß also insbesondere vorgesehen sein, dass der Führungsbolzen im unbetätigten Zustand der Bremse permanent an einem vorbestimmten Abschnitt der Innenumfangsfläche der Bohrung in metallischem Kontakt unter Vorspannung durch den vorzugsweise elastischen Führungsabschnitt anliegt. Vorzugsweise ist dies derjenige Bohrungsabschnitt, an dem der Führungsbolzen bei einer herkömmlichen konzentrischen Führung in der Bohrung beim Einleiten einer Bremsung nach Aufbrauchen des Funktionsspiels zwischen Führungsbolzen und Bohrung zuerst anschlagen würde. Dies betrifft also insbesondere denjenigen Abschnitt, der einer erwarteten Haupteintragsrichtung von Querkräften gegenüberliegt bzw. von dieser durchdrungen wird. Zum Erzielen einer dauerhaften Vorspannung kann der Führungsabschnitt dabei mit einer Exzentrizität in Querrichtung ausgebildet sein, die ein Funktionsspiel im Sinne eines Durchmesserunterschieds zwischen der Bohrung und dem Führungsbolzen um ein definiertes Maß überschreitet.

Die Erfindung betrifft ferner einen Schutzbalg für eine Scheibenbremsanordnung nach einer der vorstehend beschriebenen Varianten.

Die Erfindung wird im Folgenden beispielhaft anhand der beiliegenden Zeichnungen erläutert. Es stellen dar:
- Fig. 1: eine perspektivische Einzelteildarstellung eines Schutzbalgs für eine Scheibenbremsenanordnung gemäß einem Ausführungsbeispiel der Erfindung;
- Fig. 2: eine Teilansicht einer Scheibenbremsenanordnung gemäß Stand der Technik mit einem in Teilschnittansicht gezeigten Bremsträger und darin geführtem Führungsbolzen samt Schutzbalg;
- Fig. 3: eine Teilschnittansicht des Schutzbalgs aus Fig. 3; und
- Fig. 4: eine perspektivische Einzelteildarstellung des Schutzbalgs aus Fig. 2.

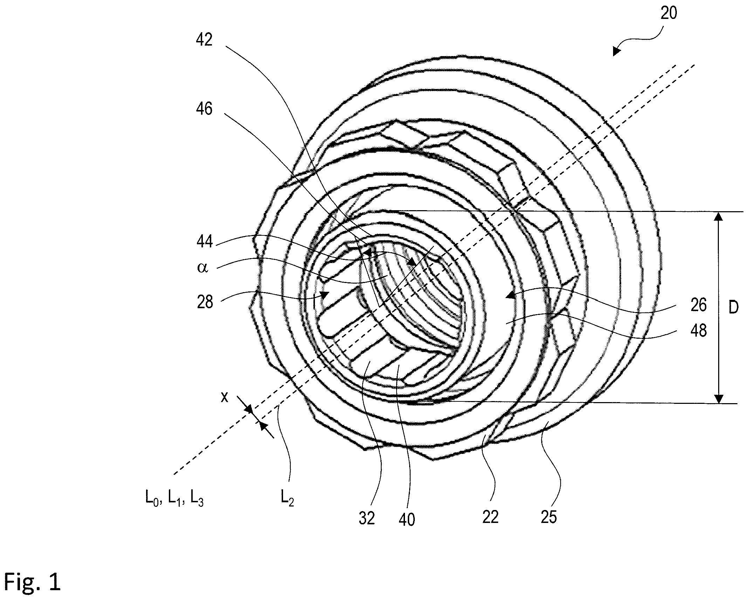

In Fig. 1 ist ein Schutzbalg gemäß einer Ausführungsform der Erfindung gezeigt und allgemein im 20 bezeichnet. Der grundlegende Aufbau des Schutzbalgs 20 entspricht im Wesentlichen dem im Zusammenhang mit den Figuren 2 bis 4 beschriebenen Aufbau gemäß Stand der Technik, mit Ausnahme des Führungsabschnitts 26. Ebenso sind die weiteren Komponenten der Scheibenbremsenanordnung analog zu der in den Figuren 2 bis 4 gezeigten Lösung ausgebildet und in Fig. 1 nicht gesondert dargestellt. Zum besseren Verständnis werden für gleichartige oder gleichwirkende Komponenten die anhand von Fig. 2 bis 4 eingeführten Bezugszeichen aber auch bei der Beschreibung von Fig. 1 verwendet.

In Fig. 1 ist der Schutzbalg 20 in einer einem Bremsträger 18 (in Fig. 1 nicht dargestellt) zugewandten Ausrichtung dargestellt. Man erkennt wiederum einen ersten Befestigungsabschnitt 22, mit dem der Schutzbalg 20 in bekannter Weise an dem Bremsträger 18 befestigbar ist. Ferner umfasst der Schutzbalg 10 einen Deformationsabschnitt 25 in Form eines deformierbaren Faltenbalgs, der einen in Fig.1 dahinterliegenden zweiten Befestigungsabschnitt 24 verdeckt. Die Befestigungsabschnitte 22, 24 und der Deformationsabschnitt 25 sind im Wesentlichen mit einem ringförmigen Querschnitt ausgebildet und erstrecken sich konzentrisch um eine Längsachse L₀ des Schutzbalgs 20.

Der Schutzbalg 20 umfasst ferner einen im Wesentlichen zylindrisch ausgebildeten Führungsabschnitt 26, der sich um eine Längsachse L3 erstreckt. Im gezeigten Beispiel sind der Führungsabschnitt 26, die Befestigungsabschnitt 22, 24 und der Faltenbalg 25 konzentrisch zueinander angeordnet, so dass die Schutzbalglängsachse L₀ und die Längsachse L3 des Führungsabschnitts 26 zusammenfallen.

Ferner erkennt man in Fig. 1, dass der Führungsabschnitt 26 an seinem Innenumfangsbereich 28 mit einem Führungsbereich 40 ausgebildet ist. Dieser bildet den mit einer Außenumfangsfläche eines zylindrischen Schaftbereichs 14 eines herkömmlichen Führungsbolzens 10 (in Fig. 1 nicht dargestellt) in Anlage bringbaren Bereich des Führungsabschnitts 26. Der Führungsbereich 40 weist mehrere in Umfangsrichtung verteilte axiale Nuten 32 auf, die in bekannter Weise die Reibungsverhältnisse zwischen dem Führungsabschnitt 26 und dem Führungsbolzen 10 einstellen und/oder Schmiermittel aufnehmen können.

An einem in Fig. 1 oberen Umfangsteilsegment des Führungsbereichs 40 ist ferner ein Versetzungsabschnitt 42 angeordnet, der sich über einen definierten Umfangsbereich 44 erstreckt, der einen Winkel a von ca. 60° einschließt. Ferner erstreckt sich der Versetzungsabschnitt 46 entlang der dritten Längsachse L3 des Führungsabschnitts 26 über dessen gesamte Längserstreckung.

Wie aus Fig. 1 ersichtlich, bildet der Versetzungsabschnitt 42 einen radial nach innen hervorstehenden Vorsprung bezogen auf den übrigen, im Wesentlichen runden Querschnitt des Führungsbereichs 40 und bildet somit einen bezüglich der dritten Längsachse L3 asymmetrischen Querschnittsbereich des Führungsbereichs 40 aus. Im gezeigten Fall ist der Versetzungsabschnitt 42 als eine lokale Materialverdickung bzw. Wandstärkenerhöhung des Führungsabschnitts 26 aus Elastomermaterial ausgebildet.

Der Versetzungsabschnitt 42 ist ferner mit einer nach innen weisenden Kontaktfläche 46 ausgebildet, mit der er in Anlage zu einem Außenumfangsbereich des Führungsbolzens 10 bringbar ist. Dabei ist die Kontaktfläche 28 mit einer gewölbten Kontur ausgebildet, wobei die Wölbung der Form der Außenumfangsfläche des Führungsbolzens 10 entspricht. Ferner definiert der Versetzungsabschnitt 42 einen Abschnitt des Führungsbereichs 40, in dem der Führungsbolzen 10 unter einer Übermaßpassung aufgenommen ist.

Bei der gezeigten Ausführungsform wird durch den Versetzungsabschnitt 42 ein radial nach innen vorstehender Anlageabschnitt des Führungsabschnitts 26 bereitgestellt. Durch diesen wird insbesondere im montierten Zustand auf den Führungsbolzen 10 eine Querkraft ausgeübt, sodass dieser eine exzentrische Position unter Vorspannung einnimmt, in der die Lage seiner Längsachse L₂ relativ zu der Längsachse L₃ des Führungsabschnitts radial versetzt ist. In Fig. 1 ist die Lage der Längsachse L₂ des Führungsbolzens 10 entsprechend angedeutet. Man erkennt, dass die zweite Längsachse L₂ exzentrisch bzw. radial versetzt zu der Längsachse L0 des Schutzbalgs 20 und der dritten Längsachse L₃ des Führungsabschnitts 26 verläuft und um einen Abstand x von diesen radial beabstandet ist.

Da der Schutzbalg 20 bei der gezeigten Ausführungsform analog zu der aus dem Stand der Technik bekannten Variante gemäß Fig. 2 konzentrisch zu einer Bohrung 16 im Bremsträger 18 angeordnet ist (nicht dargestellt), werden im montierten Zustand der Führungsbolzen 10 bzw. dessen zweite Längsachse L2 auch innerhalb der Bohrung 16 radial versetzt. Eine entsprechende Lage der Längsachse L1 der Bohrung 16 ist ebenfalls in Fig. 1 angedeutet und fällt mit den Längsachsen L0 des Schutzbalgs 10 und der Längsachse L3 des Führungsabschnitts 26 zusammen. Somit ist die zweite Längsachse L2 des Führungsbolzens 10 durch die Anlage zu dem Versetzungsabschnitt 40 auch relativ zu der Längsachse L1 der Bohrung um den Abstand x radial versetzt. Dabei ist der Abstand x derart gewählt, dass der Führungsbolzen 10 unter elastischer Vorspannung durch den Versetzungsabschnitt 42 in einer metallischen Anlage mit einer Innenumfangsfläche der Bohrung 16 steht.

Zum Erzielen einer definierten Vorspannkraft ist der Führungsabschnitt 26 ferner mit einer zylindrischen Außenumfangsfläche 48 ausgebildet, die einen definierten Durchmesser D aufweist. Mit dieser Außenumfangsfläche 48 ist der Führungsabschnitt 26 analog zu der aus dem Stand der Technik bekannten Lösung im montierten Zustand in einer Ausnehmung 27 am Bremsträger 18 (nicht dargestellt) aufnehmbar. Dabei ist der Durchmesser D des Führungsabschnitts 26 derart gewählt, dass dieser einen korrespondierenden Durchmesser der Aufnahmeausnehmung 27 geringfügig überschreitet. Dadurch wird der Führungsabschnitt 26 bei einem Anordnen am Bremsträger 18 unter Einwirken einer entsprechenden Querkraft elastisch deformiert. Dabei wirkt die Querkraft über den Versetzungsabschnitt 42 auch auf den Führungsbolzen 10 ein und spannt diesen gegen die Innenumfangsfläche der Bohrung 16 entlang des mit x markierten Abstands vor. Da der Schutzbalg 20 im gezeigten Fall insgesamt einstückig und aus einem elastischen Material hergestellt ist, ist der Führungsbolzen 10 insbesondere in einer der Vorspannungsrichtung entgegengesetzten Richtung mit einem Führungsspiel in Querrichtung versehen.

## Patentansprüche

1. Scheibenbremsenanordnung für eine Kraftfahrzeugbremsanlage,
umfassend einen Bremsträger (18), der wenigstens eine eine erste Längsachse (L1) definierende Bohrung (16) aufweist, und einen Führungsbolzen (10), der in der Bohrung (16) angeordnet und dazu ausgebildet ist, den Bremssattel relativ zum Bremsträger (18) verschiebbar zu lagern, wobei der Führungsbolzen (10) eine zweite Längsachse (L2) definiert,
wobei die Scheibenbremsenanordnung ferner einen Schutzbalg (20) umfasst, der aus der Bohrung (16) herausragende Bereiche des Führungsbolzens (10) zumindest teilweise umgibt,
**dadurch gekennzeichnet, dass** der Schutzbalg (20) einen Führungsabschnitt (26) aufweist, der dazu eingerichtet ist, den Führungsbolzen (10) derart verlagerbar zu führen, dass die zweite Längsachse (L2) des Führungsbolzens (10) relativ zu der ersten Längsachse (L1) der Bohrung (16) versetzt ist.

2. Scheibenbremsenanordnung nach Anspruch 1,
**dadurch gekennzeichnet, dass** sich der Führungsabschnitt (26) im Wesentlichen um eine dritte Längsachse (L3) erstreckt.

3. Scheibenbremsenanordnung nach Anspruch 2,
**dadurch gekennzeichnet, dass** die dritte Längsachse (L3) des Führungsabschnitts (26) relativ zu der ersten Längsachse (L1) der Bohrung (16) versetzt ist.

4. Scheibenbremsenanordnung nach Anspruch 3,
**dadurch gekennzeichnet, dass** der Führungsbolzen (10) derart von dem Führungsabschnitt (26) geführt ist, dass die zweite Längsachse (L2) des Führungsbolzens (10) im Wesentlichen mit der dritten Längsachse (L3) des Führungsabschnittes (26) zusammenfällt.

5. Scheibenbremsenanordnung nach Anspruch 1 oder 2,
**dadurch gekennzeichnet, dass** der Führungsabschnitt (26) einen mit dem Führungsbolzen (20) wechselwirkenden Führungsbereich (40) aufweist, der zumindest abschnittsweise mit einem asymmetrischen Querschnitt ausgebildet ist.

6. Scheibenbremsenanordnung nach Anspruch 5,
**dadurch gekennzeichnet, dass** der Führungsbereich (40) einen Innenumfangsbereich (28) des Führungsabschnittes (26) umfasst.

7. Scheibenbremsenanordnung nach Anspruch 5 oder 6,
**dadurch gekennzeichnet, dass** die dritte Längsachse (L3) des Führungsabschnittes (26) im Wesentlichen mit der ersten Längsachse (L1) der Bohrung (16) zusammenfällt.

8. Scheibenbremsenanordnung nach einem der Ansprüche 5 bis 7,
**dadurch gekennzeichnet, dass** der Führungsabschnitt (26) wenigstens einen relativ zu dem Führungsbereich (40) radial einwärts hervorstehenden Versetzungsabschnitt (42) aufweist.

9. Scheibenbremsenanordnung nach Anspruch 6 und 8,
**dadurch gekennzeichnet, dass** der wenigstens eine Versetzungsabschnitt (42) einen definierten Umfangsbereich (44) des Innenumfangsbereiches (28) überspannt.

10. Scheibenbremsenanordnung nach Anspruch 8 oder 9,
**dadurch gekennzeichnet, dass** der wenigstens eine Versetzungsabschnitt (42) korrespondierend zu denjenigen Bereichen des Führungsbolzens (10) ausgebildet ist, mit denen er wechselwirkt.

11. Scheibenbremsenanordnung nach einem der Ansprüche 8 bis 10,
**dadurch gekennzeichnet, dass** sich der wenigstens eine Versetzungsabschnitt (42) über mehr als die Hälfte der Längserstreckung des Führungsbereiches (26) axial erstreckt und insbesondere, dass sich der Versetzungsabschnitt (42) im Wesentlichen über die gesamte Längserstreckung des Führungsbereiches (26) axial erstreckt.

12. Scheibenbremsenanordnung nach einem der vorangehenden Ansprüche,
**dadurch gekennzeichnet, dass** der Schutzbalg (20) am Bremsträger (18) angeordnet ist, insbesondere dass der Schutzbalg (20) zumindest abschnittsweise in einer Ausnehmung (27) am Bremsträger (18) aufgenommen ist.

13. Scheibenbremsenanordnung nach Anspruch 12,
**dadurch gekennzeichnet, dass** der Schutzbalg (20) über einen Außenumfangsbereich (48) des Führungsabschnittes (26) am Bremsträger (18) angeordnet ist.

14. Scheibenbremsenanordnung nach Anspruch 12 oder 13,
**dadurch gekennzeichnet, dass** bei dem Anordnen des Schutzbalges (20) am Bremsträger (18) eine Vorspannungskraft derart in den Führungsabschnitt (26) einleitbar ist, dass dieser in eine Anlage zu dem Führungsbolzen (10) vorgespannt wird.

15. Schutzbalg (20),
für eine Scheibenbremsanordnung nach einem der vorangehenden Ansprüche.

## Claims

1. A disc brake arrangement for a motor vehicle braking system comprising a brake carrier (18), which has at least one bore (16) defining a first longitudinal axis (L1), and a guide pin (10), which is arranged in the bore (16) and is configured to support the brake caliper slidably relative to the brake carrier (18), wherein the guide pin (10) defines a second longitudinal axis (L2),
wherein the disc brake arrangement further comprises a protective bellows (20), which at least partially surrounds regions of the guide pin (10) protruding from the bore (16),
**characterized in that** the protective bellows (20) has a guide portion (26), which is configured to guide the guide pin (10) displaceably in such a way that the second longitudinal axis (L2) of the guide pin (10) is offset relative to the first longitudinal axis (L1) of the bore (16).

2. The disc brake arrangement according to Claim 1,
**characterized in that** the guide portion (26) extends substantially about a third longitudinal axis (L3).

3. The disc brake arrangement according to Claim 2,
**characterized in that** the third longitudinal axis (L3) of the guide portion (26) is offset relative to the first longitudinal axis (L1) of the bore (16).

4. The disc brake arrangement according to Claim 3,
**characterized in that** the guide pin (10) is guided by the guide portion (26) in such a way that the second longitudinal axis (L2) of the guide pin (10) substantially coincides with the third longitudinal axis (L3) of the guide portion (26).

5. The disc brake arrangement according to Claim 1 or 2,
**characterized in that** the guide portion (26) has a guide region (40) that interacts with the guide pin (20) and is formed at least in some sections with an asymmetrical cross section.

6. The disc brake arrangement according to Claim 5,
**characterized in that** the guide region (40) comprises an inner circumferential area (28) of the guide portion (26).

7. The disc brake arrangement according to Claim 5 or 6,
**characterized in that** the third longitudinal axis (L3) of the guide portion (26) substantially coincides with the first longitudinal axis (L1) of the bore (16).

8. The disc brake arrangement according to one of Claims 5 to 7,
**characterized in that** the guide portion (26) has at least one offset portion (42) projecting radially inwards relative to the guide region (40).

9. The disc brake arrangement according to Claim 6 and 8,
**characterized in that** the at least one offset portion (42) spans a defined circumferential area (44) of the inner circumferential area (28).

10. The disc brake arrangement according to Claim 8 or 9,
**characterized in that** the at least one offset portion (42) is configured corresponding to the regions of the guide pin (10) with which it interacts.

11. The disc brake arrangement according to one of Claims 8 to 10,
**characterized in that** the at least one offset portion (42) extends axially over more than half of the longitudinal extension of the guide region (26), and in particular that the offset portion (42) extends axially substantially over the entire longitudinal extension of the guide region (26).

12. The disc brake arrangement according to one of the previous Claims,
**characterized in that** the protective bellows (20) is arranged on the brake carrier (18), in particular that the protective bellows (20) is taken up at least in some sections in a recess (27) on the brake carrier (18).

13. The disc brake arrangement according to Claim 12,
**characterized in that** the protective bellows (20) is arranged via an external circumferential area (48) of the guide portion (26) on the brake carrier (18).

14. The disc brake arrangement according to Claim 12 or 13,
**characterized in that**, when arranging the protective bellows (20) on the brake carrier (18), a pretensioning force can be introduced into the guide portion (26) so that this is pretensioned in contact to the guide pin (10).

15. Protective bellows (20) for a disc brake arrangement according to one of the previous claims.

## Revendications

1. Ensemble frein à disque pour un système de freinage de véhicule automobile ; comprenant un support de frein (18) qui présente au moins un alésage (16) définissant un premier axe longitudinal (L1) et un boulon de guidage (10) disposé dans l'alésage (16) et conçu pour supporter l'étrier de frein de manière coulissante par rapport au support de frein (18), le boulon de guidage (10) définissant un deuxième axe longitudinal (L2),
dans lequel l'ensemble frein à disque comprend en outre un soufflet de protection (20) qui entoure au moins partiellement des zones du boulon de guidage (10) dépassant de l'alésage (16),
**caractérisé en ce que** le soufflet de protection (20) présente une partie de guidage (26) qui est conçue pour guider de manière mobile le boulon de guidage (10) de telle sorte que le deuxième axe longitudinal (L2) du boulon de guidage (10) soit décalé par rapport au premier axe longitudinal (L1) de l'alésage (16).

2. Ensemble frein à disque selon la revendication 1,
**caractérisé en ce que** la partie de guidage (26) s'étend sensiblement autour d'un troisième axe longitudinal (L3).

3. Ensemble frein à disque selon la revendication 2,
**caractérisé en ce que** le troisième axe longitudinal (L3) de la partie de guidage (26) est décalé par rapport au premier axe longitudinal (L1) de l'alésage (16).

4. Ensemble frein à disque selon la revendication 3,
**caractérisé en ce que** le boulon de guidage (10) est guidé par la partie de guidage (26) de telle sorte que le deuxième axe longitudinal (L2) du boulon de guidage (10) coïncide sensiblement avec le troisième axe longitudinal (L3) de la partie de guidage (26).

5. Ensemble frein à disque selon la revendication 1 ou 2,
**caractérisé en ce que** la partie de guidage (26) présente une zone de guidage (40) qui interagit avec le boulon de guidage (20) et qui est formée au moins sur certaines parties avec une section transversale asymétrique.

6. Ensemble frein à disque selon la revendication 5,
**caractérisé en ce que** la zone de guidage (40) comprend une zone périphérique intérieure (28) de la partie de guidage (26).

7. Ensemble frein à disque selon la revendication 5 ou 6,
**caractérisé en ce que** le troisième axe longitudinal (L3) de la partie de guidage (26) coïncide sensiblement avec le premier axe longitudinal (L1) de l'alésage (16).

8. Ensemble frein à disque selon l'une des revendications 5 à 7,
**caractérisé en ce que** la partie de guidage (26) présente au moins une partie de déplacement (42) faisant saillie radialement vers l'intérieur par rapport à la partie de guidage (40).

9. Ensemble frein à disque selon les revendications 6 et 8,
**caractérisé en ce que** ladite au moins une partie de déplacement (42) s'étend sur une zone périphérique définie (44) de la zone périphérique intérieure (28).

10. Ensemble frein à disque selon la revendication 8 ou 9,
**caractérisé en ce que** ladite au moins une partie de déplacement (42) est formée de manière correspondante aux zones du boulon de guidage (10) avec lesquelles elle interagit.

11. Ensemble frein à disque selon l'une des revendications 8 à 10,
**caractérisé en ce que** ladite au moins une partie de déplacement (42) s'étend axialement sur plus de la moitié de l'extension longitudinale de la zone de guidage (26) et en particulier **en ce que** la partie de déplacement (42) s'étend axialement sensiblement sur toute l'extension longitudinale de la zone de guidage (26).

12. Ensemble frein à disque selon l'une des revendications précédentes,
**caractérisé en ce que** le soufflet de protection (20) est disposé sur le support de frein (18), en particulier **en ce que** le soufflet de protection (20) est reçu au moins sur certaines parties dans un évidement (27) sur le support de frein (18).

13. Ensemble frein à disque selon la revendication 12,
**caractérisé en ce que** le soufflet de protection (20) est disposé sur une zone périphérique extérieure (48) de la partie de guidage (26) sur le support de frein (18).

14. Ensemble frein à disque selon la revendication 12 ou 13,
**caractérisé en ce que**, lors de la disposition du soufflet de protection (20) sur le support de frein (18), une force de précontrainte peut être introduite dans la partie de guidage (26) de telle sorte que celle-ci soit précontrainte en contact avec le boulon de guidage (10).

15. Soufflet de protection (20) pour un ensemble frein à disque selon l'une des revendications précédentes.
